# EUROPÄISCHE PATENTANMELDUNG

(11) **EP 0 978 235 A1**
(43) Veröffentlichungstag der Anmeldung: **09.02.2000**
(21) Anmeldenummer: 98122427.2
(22) Anmeldetag: 26.11.1998
(51) Int. Cl.: A22C 17/12

(54) **Entschwartungsgerät für Schweinefleisch**

(30) Priorität: 07.08.1998 DE 29814162 U
(71) Anmelder: Gugg, Anton, 5310 Mondsee (AT)
(72) Erfinder: Gugg, Anton, 5310 Mondsee (AT)
(74) Vertreter: Neubauer, Hans-Jürgen, Dipl.-Phys.

(57) **Zusammenfassung**

Die Erfindung betrifft ein Entschwartungsgerät für Schweinefleisch mit einem Messerteil und einer angetriebenen Walze, sowie einem Abstreifer. Erfindungsgemäß sind sowohl ein feststehender Abstreifer [9] als auch ein ortsveränderlicher Abstreifer [13; 24] vorgesehen, denen jeweils Austrittspalte [12, 23] zugeordnet sind, mit denen ein Schwartenaustritt an eine senkrechte und waagrechte Entschwartungsrichtung für eine gute Gerätehandhabung anpaßbar ist.

## Beschreibung

Die Erfindung betrifft ein Entschwartungsgerät für Schweinefleisch nach dem Oberbegriff des Anspruchs 1.

Ein bekanntes, gattungsgemäßes Entschwartungsgerät für Schweinefleisch [DE 41 33 361 C2] enthält ein Messerteil, das an einem freien Bereich ein Entschwartungs-Messer mit einer geradlinigen Messerschneide bestimmter Breite und in einem Abstand dazu, entsprechend der Schwartendicke, eine angetriebene Walze aufweist. Bei einer Relativbewegung zwischen einem zu entschwartenden Fleischbereich und dem vorbeistreichenden Messerteil wird die Schwarte abgetrennt. Das Messerteil und eine Antriebseinheit für die Walze bilden ein betriebsmäßig tragbares Entschwartungs-Handgerät. Im Umfangsbereich der Walze ist ein Abstreifer angeordnet, der die Schwarte von der Walze abstreift und dem ein Austrittspalt für die Schwarte am Gerätegehäuse nachgeordnet ist.

Zudem ist bei diesem Entschwartungsgerät zu beiden Endseiten des Entschwartungs-Messers als beidseitige Begrenzung der Breite der geradlinigen Messerschneide und in Querrichtung dazu jeweils ein zusätzliches, angetriebenes Breitentrenn-Messer angebracht. Durch diese angetriebenen Breitentrenn-Messer wird eine Schwarte auch zu beiden Seiten sauber abgetrennt. Zudem sind am Umfang der Walze verteilt Zähne vorgesehen, die die Schwarte erfassen und an ihrer Oberseite festkrallen, so daß das Entschwartungs-Messer mittels der angetriebenen Walze ohne Schlupf hinter der abzutrennenden Schwarte durchgezogen wird.

Dieses gattungsgemäße Entschwartungsgerät ist vorzugsweise für eine senkrecht nach unten führende Entschwartungsrichtung, beispielsweise an hängenden halben oder ganzen Schweinen einsetzbar. Eine spezielle, gerichtete Schwartenaustrittführung für eine gute Handhabung des Geräts sowohl bei senkrechter Entschwartungsrichtung als auch bei waagrechter Entschwartungsrichtung ist hier nicht vorgesehen.

Aufgabe der Erfindung ist es, ein gattungsgemäßes Entschwartungsgerät so weiterzubilden, daß der Entschwartungsaustritt und damit die Handhabung des Entschwartungsgeräts sowohl für eine senkrechte, nach unten gerichtete Entschwartungsrichtung als auch eine waagrechte Entschwartungsrichtung so verbessert werden, daß die abgetrennte Schwarte nicht wieder eingezogen wird oder die Handhabung stört.

Diese Aufgabe wird mit den Merkmalen des Anspruchs 1 gelöst.

Gemäß Anspruch 1 ist ein erster, im Gerätegehäuse feststehender Abstreifer vorgesehen, dessen Abstreiferkante in Umfangs- und Drehrichtung der Walze weit, vorzugsweise etwa um 180° versetzt zum Entschwartungs-Messer liegt und der mit einer Leitfläche die Schwarte zu einem ersten Austrittspalt führt, der etwa in die Entschwartungsrichtung für einen entsprechend gerichteten Schwartenaustritt weist. Vorzugsweise ist der Schwartenaustritt durch diesen ersten Austrittspalt für die etwa senkrecht nach unten gerichtete Entschwartung ganzer oder halber Schweine vor dem Zerteilen in hängender Stellung bestimmt.

Weiter ist ein zweiter, ortsveränderlicher Abstreifer vorgesehen, der vorzugsweise für eine waagrechte Entschwartung bestimmt ist. Die Abstreiferkante dieses zweiten Abstreifers liegt in der Nähe des Entschwartungs-Messers im Walzenbereich. Der zweite Abstreifer führt in seiner Funktionsstellung mit einer Leitfläche die Schwarte zu einem zweiten Austrittspalt, der unmittelbar dem Entschwartungs-Messer nachgeordnet ist und der etwa entgegen der Entschwartungsrichtung für einen entsprechend gerichteten Schwartenaustritt weist. Dabei wird die Schwarte durch den in seine Funktionsstellung gebrachten zweiten Abstreifer schon vor dem ersten, feststehenden Abstreifer von der Walze abgestreift, so daß der erste Abstreifer und der erste Austrittspalt funktionslos sind.

Der zweite Abstreifer ist in eine Nichtfunktionsstellung bringbar, wobei er außerhalb der Schwartenführung liegt, so daß die Schwarte ungehindert durch die Walze und ggf. durch zugeordnete Leitflächen bis zum ersten, feststehenden Abstreifer und zum ersten Austrittspalt transportiert wird.

Vorteilhaft kann durch die Verwendung zweier Austrittspalte in Verbindung mit einem feststehenden Abstreifer und einem lageveränderlichen Abstreifer ein geeigneter Schwartenaustritt für eine senkrechte oder waagrechte Geräteführung erhalten werden. Die Gerätehandhabung wird dadurch sowohl bei einer senkrechten Geräteführung als auch bei einer waagrechten Geräteführung mit einem entsprechend eingestellten zweiten Abstreifer verbessert.

Gemäß Anspruch 2 ist eine erfindungsgemäße Anordnung mit zwei Abstreifern und zwei Austrittspalten auch mit an sich bekannten Breitentrenn-Messern kombinierbar, wobei die Walze am Umfang vorzugsweise mit Zähnen bestückt ist. Diese Zähne sind vorteilhaft in Drehrichtung der Walze schräg angestellt, so daß sie sich in der Schwarte verkrallen.

Um in jedem Fall sicherzustellen, daß die Schwarte in der Nichtfunktionsstellung des zweiten Abstreifers nicht unerwünscht durch den zweiten Austrittspalt zu Anfang austritt, wird mit Anspruch 3 eine Abdeckung in der Form eines Schiebers oder eine Klappe vorgeschlagen, mit dem der zweite Austrittspalt verschließbar ist. Sowohl der zweite Abstreifer als auch ggf. die Abdeckung können in unterschiedlicher Weise lageveränderlich gehalten werden. Der zweite Abstreifer und ggf. die Abdeckung können beispielsweise in Längsführungen ins Gerät in ihre Funktionsstellungen einschiebbar sein und wenn sie nicht benötigt werden, aus dem Gerät herausgenommen werden. Weiter kann eine ständige Verbindung des zweiten Abstreifers und der Abdeckung im Gehäuse vorliegen mit einer Schwenklagerung, über die die Abdeckung und/oder der zweite Abstreifer in und aus ihrer Funktionsstellung schwenkbar sind.

In einer Ausführungsform nach Anspruch 4 sind die Abdeckung als Schieber und der zweite Abstreifer einteilig ausgeführt dergestalt, daß der zweite Abstreifer von einer Funktionsstellung in einer Führung in eine Nichtfunktionsstellung verschiebbar ist, wo er zugleich den zweiten Austrittspalt verschließt. Zweckmäßig wird nach Anspruch 5 die Schieberichtung etwa quer zum zweiten Austrittspalt gewählt. Eine Betätigung dieses zweiten Abstreifers kann einfach über ein aus dem Gehäuse herausgeführtes und mit dem zweiten Abstreifer verbundenes Betätigungsteil erfolgen, das jeweils in der Funktionsstellung und Nichtfunktionsstellung des zweiten Abstreifers verriegelbar ist. Damit wird eine kompakte Anordnung mit wenigen Teile und guter Betätigungsmöglichkeit erreicht.

Mit den Merkmalen des Anspruchs 6 wird eine alternative, vorteilhafte Ausführung beansprucht, bei der als Abdeckung und zugleich als zweiter Abstreifer eine Klappe verwendet ist. Diese ist so am Gehäuse angelenkt, daß sie in einer ersten Klappenstellung als Funktionsstellung des Abstreifers gegen die Walze klappbar ist mit einer Leitfunktion für die Schwarte zum zweiten Austrittspalt. In einer zweiten Klappenstellung wird dagegen der zweite Austrittspalt verschlossen und die Führung für die Schwarte bis zum ersten, feststehenden Abstreifer freigegeben. Die Klappe ist dabei in den beiden Klappenstellungen mit an sich bekannten Maßnahmen, beispielsweise durch Klemmschrauben, Rasten, etc. arretierbar.

Anhand einer Zeichnung wird die Erfindung näher erläutert.

Es zeigen:
- Fig. 1: eine Seitenschnittansicht eines Entschwartungsgeräts mit einer Abstreifereinstellung für eine senkrecht nach unten gerichtete Entschwartung mit einem Schnitt entlang der Linie A-A aus Fig. 2,
- Fig. 2: eine Draufsicht auf das Entschwartungsgerät nach Fig. 1,
- Fig. 3: das Entschwartungsgerät nach Fig. 1 mit einer Abstreifereinstellung für eine waagrechte Entschwartungsrichtung,
- Fig. 4: eine Seitenschnittansicht eines Entschwartungsgeräts einer zweiten Ausführungsform mit einer Abstreifereinstellung für eine senkrecht nach unten gerichtete Entschwartung, und
- Fig. 5: das Entschwartungsgerät nach Fig. 4 mit einer Abstreifereinstellung für eine waagrechte Entschwartungsrichtung.

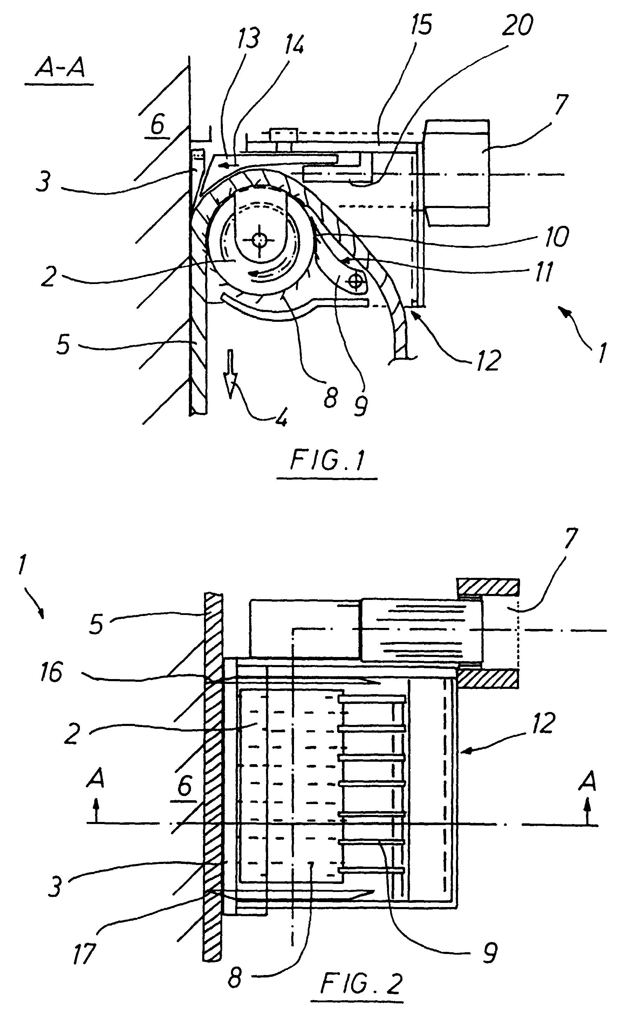

In Fig. 1 ist ein Entschwartungsgerät 1 dargestellt mit einer Einzugwalze 2. Ein Entschwartungs-Messer 3 trennt bei einer Abwärtsbewegung entsprechend der Entschwartungsrichtung 4 einen Schwartenstreifen 5 von einem Fleischstück 6. Die Einzugwalze 2 ist durch einen [nicht dargestellten] elektromotorischen Antrieb und ein nachgeschaltetes Getriebe rechtsdrehend angetrieben. Es ist ein Steckansatz 7 dargestellt, in den beispielsweise ein Bohrmaschinenantrieb eingesteckt und angekoppelt werden kann.

Die Einzugwalze 2 weist am Umfang verteilt Zähne 8 auf zum Festkrallen im Schwartenstreifen 5. Durch die Zähne 8 wird der abgetrennte Schwartenstreifen 5 von der Einzugwalze 2 mitgenommen, bis zu einem ersten, feststehenden Abstreifer 9, dessen Abstreiferkante 10 etwa um 180° versetzt zum Entschwartungs-Messer 3 liegt. Dort wird durch den Abstreifer 9 der Schwartenstreifen 5 von der Einzugwalze 2 abgestreift und abgehoben und ggf. über eine Leitfläche 11 durch einen ersten Austrittspalt 12 ausgeschoben.

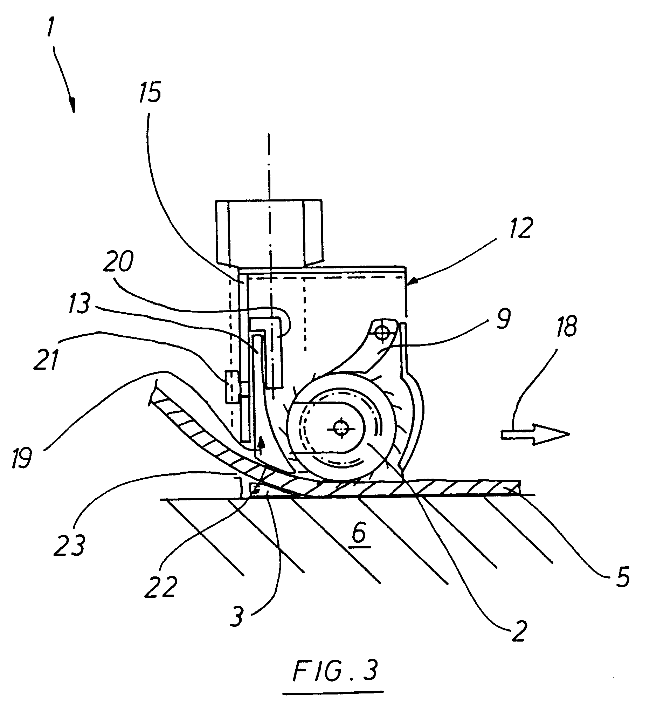

Dabei ist ein zweiter, ortsveränderlicher Abstreifer 13 in seine Nichtfunktionsstellung entsprechend dem Pfeil 14 nach links verschoben und dort so arretiert, daß er den Transport des Schwartenstreifens 5 zum ersten Abstreifer 9 freigibt. Der zweite Abstreifer 13 ist näher in Verbindung mit Fig. 3 beschrieben.

In Fig. 2 ist in einer Draufsicht das Entschwartungsgerät 1 dargestellt, wobei der Entschwartungsstreifen 5 sowie die obere Gehäusewand 15 weggelassen sind. Aus Fig. 2 ist zu erkennen, daß zu beiden Seiten der Einzugwalze 2 Breitentrenn-Messer 16, 17 angeordnet und zusammen mit der Einzugwalze 2 angetrieben sind. Diese sind als Schneidräder ausgebildet, die durch ihre Drehbewegung die Kanten des Schwartenstreifens 5 bis zum Fleischstück 6 durchtrennen.

In Fig. 3 ist das selbe Entschwartungsgerät 1 dargestellt, jedoch um 90° gedreht, wobei das Fleischstück 6 und die Entschwartungsrichtung 18 waagrecht liegen.

Für diese waagrechte Entschwartungsrichtung 18 ist der zweite Abstreifer 13 entsprechend dem Pfeil 19 nach oben in einer Führung 20 verschoben und arretiert. Dazu dient ein Betätigungsteil 21, das durch die Gehäusewand 15 nach außen geführt und mit dem zweiten Abstreifer 13 verbunden ist.

Damit steht in Fig. 3 der zweite Abstreifer 13 in seiner Funktionsstellung, in der er bereits im Bereich des Entschwartungs-Messers 3 den Entschwartungsstreifen 5 von der Einzugwalze 2 abstreift und über eine Leitfläche 22 einem zweiten Austrittspalt 23 zuführt, der unmittelbar hinter dem Entschwartungs-Messer 3 liegt. Damit wird hier der Schwartenstreifen 5 entgegen der Entschwartungsrichtung 18 ausgestoßen. Bei dieser Stellung des zweiten Abstreifers 13 sind somit der erste Abstreifer 9 und der erste Austrittspalt 12 funktionslos.

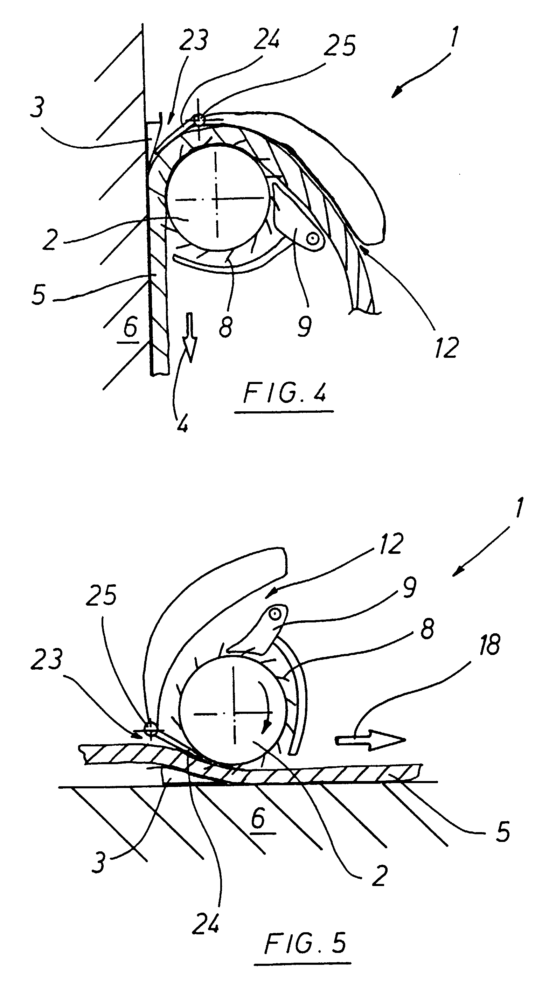

Die in den Fig. 4 und 5 dargestellte Ausführungsform eines Entschwartungsgeräts 1 entspricht im Wesentlichen den Darstellungen nach den Fig. 1 und 3, wobei für gleiche Teile mit gleicher Funktion die gleichen Bezugszeichen verwendet sind. Zudem sind der Übersichtlichkeit halber nur die wesentlichen Funktionsteile, die die Schwartenführung betreffen, dargestellt.

Anstelle des verschiebbaren zweiten Abstreifers 13 aus den Fig. 1 und 3 ist in der Ausführungsform nach den Fig. 4 und 5 als Abstreifer eine schwenkbare Klappe 24 verwendet, die gehäuseseitig an einem Schwenklager 25 gelagert ist.

In Fig. 4 ist die Klappe 24 in eine Klappenstellung geschwenkt, in der sie den zweiten Austrittspalt 23 abdeckt und zugleich eine Leitfunktion für den abgetrennten Schwartenstreifen 5 in Richtung auf den ersten Austrittspalt 12 ausführt. Diese Klappenstellung ist für eine Entschwartungrichtung senkrecht nach unten [Pfeil 4] geeignet. Ersichtlich würde bei einer Drehung zu einer waagrechten Entschwartung bei dieser Klappenstellung der Schwartenstreifen 5 aus dem ersten Austrittspalt 12 austreten und sich so vor das Gerät legen, daß die Gefahr eines Wiedereinzugs entsteht. Daher wird für eine waagrechte Entschwartungsrichtung [Pfeil 18] gemäß Fig. 5 die dort angegebene Klappenstellung der Klappe 24 vorgeschlagen.

In Fig. 5 ist die Klappe 14 so gegen die Walze 2 geklappt, daß damit der Schwartenstreifen 5 abgestreift wird und aus dem zweiten Austrittspalt 23 herausgeleitet wird. Die Klappe 24 kann dabei in der Art eines Rechens mit Spalten an der freien Klappenkante ausgeführt sein, durch die die in Axialrichtung gegeneinander versetzten Zähne hindurchstreichen können.

## Patentansprüche

1. Entschwartungsgerät für Schweinefleisch,
mit einem Messerteil, das an einem freien Bereich ein Entschwartungs-Messer [3] mit einer geradlinigen Messerschneide bestimmter Breite und in einem Abstand dazu, entsprechend der Schwartendicke, eine angetriebene Walze [2] aufweist, so daß bei einer Relativbewegung zwischen einem zu entschwartenden Fleischbereich und dem vorbeistreichenden Messerteil die Schwarte [5] abgetrennt wird, wobei das Messerteil und eine Antriebseinheit ein betriebsmäßig tragbares Entschwartungs-Handgerät [1] bilden und im Umfangsbereich der Walze [2] ein Abstreifer angeordnet ist, der die Schwarte [5] von der Walze [2] abstreift und dem ein Austrittspalt für die Schwarte [5] am Gerätegehäuse nachgeordnet ist,
dadurch gekennzeichnet,
daß ein erster, feststehender Abstreifer [9] vorgesehen ist, dessen Abstreiferkante in Umfangs- und Drehrichtung der Walze [2] weit, vorzugsweise etwa um 180° versetzt zum Entschwartungs-Messer [3] liegt und der mit einer Leitfläche [11] die Schwarte zu einem ersten Austrittspalt [12] führt, der etwa in die Entschwartungsrichtung [4] für einen entsprechend gerichteten Schwartenaustritt weist, vorzugsweise für die etwa senkrecht nach unten gerichtete Entschwartung ganzer oder halber Schweine vor dem Zerteilen in hängender Stellung,
daß ein zweiter, ortsveränderlicher Abstreifer [13; 24] vorgesehen ist, der vorzugsweise für eine etwa waagrechte Entschwartung in eine Funktionsstellung bringbar ist, wobei dessen Abstreiferkante in der Nähe des Entschwartungs-Messers [3] liegt und der in seiner Funktionsstellung mit einer Leitfläche die Schwarte [5] zu einem zweiten Austrittspalt [23] führt, der unmittelbar dem Entschwartungs-Messer [3] nachgeordnet ist und der etwa entgegen die Entschwartungsrichtung [18] für einen entsprechend gerichteten Schwartenaustritt weist, wobei der erste, feststehende Abstreifer [9] und der erste Austrittspalt [12] funktionslos sind, und
daß der zweite Abstreifer [13] in eine Nichtfunktionsstellung außerhalb der Schwartenführung bringbar ist.

2. Entschwartungsgerät nach Anspruch 1, dadurch gekennzeichnet,
daß zu beiden Endseiten des Entschwartungs-Messers [3] als beidseitige Begrenzung der Breite der geradlinigen Messerschneide und in Querrichtung dazu jeweils ein zusätzliches, gegebenenfalls angetriebenes Breitentrenn-Messer [16, 17] angebracht ist, mit einer Schneidenbreite wenigstens im Bereich zwischen dem Entschwartungs-Messer [3] und der Walze [2], und
daß am Umfang der gegebenenfalls federnd gelagerten und einstellbaren Walze [2] verteilt Zähne [8] vorgesehen sind.

3. Entschwartungsgerät nach Anspruch 1 oder Anspruch 2, dadurch gekennzeichnet, daß am zweiten Austrittspalt [23] eine verstellbare Abdeckung angeordnet ist, mit dem der zweite Austrittspalt [23] in der Nichtfunktionsstellung des zweiten Abstreifers [13] verschließbar ist.

4. Entschwartungsgerät nach Anspruch 3, dadurch gekennzeichnet, daß als Abdeckung ein Schieber im zweiten Abstreifer [13] integriert ist dergestalt, daß der zweite Abstreifer [13] von einer Funktionsstellung in einer Führung [20] in eine Nichtfunktionsstellung verschiebbar ist und dabei zugleich den zweiten Austrittspalt [23] verschließt.

5. Entschwartungsgerät nach Anspruch 4, dadurch gekennzeichnet, daß die Schieberichtung dieses zweiten verschiebbaren Abstreifers [13] etwa quer zum zweiten Austrittspalt [23] verläuft und ein mit diesem zweiten Abstreifer [13] verbundenes Betätigungsteil [21] zur Gehäuseaußenseite geführt ist, mit dem der zweite Abstreifer [13] in seine Funktionsstellung und Nichtfunktionsstellung überführbar und dort jeweils verriegelbar ist.

6. Entschwartungsgerät nach Anspruch 3, dadurch gekennzeichnet,
daß als Abdeckung und zweiter Abstreifer eine Klappe [14] verwendet ist, die dergestalt angelenkt ist, daß sie in einer ersten Klappenstellung als Funktionsstellung des Abstreifers [13] gegen die Walze [2] klappbar ist mit einer Leitfunktion für die Schwarte [5] zum zweiten Austrittspalt [23], und
daß sie in einer zweiten Klappenstellung den zweiten Austrittspalt [23] verschließt, wobei sie in beiden Klappenstellungen arretierbar ist.
